# FASCICULE DE BREVET EUROPEEN

(11) **EP 1 423 763 B1**
(45) Date de publication et mention de la délivrance du brevet: **10.10.2007**
(21) Numéro de dépôt: 02794611.0
(22) Date de dépôt: 30.07.2002
(51) Int. Cl.: G05G 1/14

(54) **PEDALIER A FONCTIONS COUPLEES.**
PEDALHALTERUNG MIT GEKOPPELTEN FUNKTIONEN
PEDAL SUPPORT WITH COUPLED FUNCTIONS

(30) Priorité: 08.08.2001 FR 0110621
(43) Date de publication de la demande: 02.06.2004
(73) Titulaire: ROBERT BOSCH GMBH, 70442 Stuttgart (DE)
(72) Inventeur: ATTARD, Jean-Marc, F-60500 CHANTILLY (FR)
(74) Mandataire: Hurwic, Aleksander Wiktor
(86) Numéro de dépôt international: PCT/FR2002/002728
(87) Numéro de publication internationale: WO 2003/014857

(56) Documents cités:
- EP-A- 0 909 687
- US-A- 3 891 071
- US-A- 4 310 064

## Description

La présente invention concerne, de façon générale, les systèmes de freinage pour véhicules automobiles.

Plus précisément, l'invention concerne un pédalier pour véhicule automobile, comprenant une pédale d'embrayage, une pédale de frein, et une pédale d'accélérateur montées à rotation autour de premier, second et troisième pivots respectifs sensiblement parallèles les uns aux autres, chaque pédale adoptant à tout instant soit une position de repos, soit une position d'actionnement maximal, soit une position intermédiaire entre les positions de repos et d'actionnement maximal, et chaque pédale recevant un couple élastique orienté suivant un premier sens de rotation autour de son pivot et qui la sollicite vers sa position de repos.

Les pédaliers répondant à cette définition sont connus et utilisés depuis longtemps en toute satisfaction (cf. EP-A-0 909 687).

L'invention, qui traduit essentiellement le souci d'accroître le niveau de sécurité des véhicules automobiles, repose néanmoins sur la découverte du fait que les pédaliers traditionnels sont perfectibles, et pour but de proposer un pédalier perfectionné permettant au moins de raccourcir les distances de freinage.

A cette fin, le pédalier selon l'invention, par ailleurs conforme à la définition générique qu'en donne le préambule ci-dessus, est caractérisé par les caractéristiques de la partie caractérisante de la revendication 1.

Grâce à cet agencement, la pédale de frein est immédiatement opérationnelle dès que la pédale d'accélérateur est relâchée, tous les jeux parasites susceptibles de retarder le freinage étant compensés avant l'actionnement de la pédale de frein par lâchage de la pédale d'accélérateur.

Dans un mode de réalisation, la pédale de frein comprend un bras de levier inférieur s'étendant entre le second pivot et un patin de frein, la pédale d'accélérateur comprend des bras de levier inférieur et supérieur s'étendant de part et d'autre du troisième pivot, le bras de levier inférieur portant un patin d'accélérateur, et la première liaison comprend un premier doigt porté par le bras de levier supérieur de la pédale d'accélérateur, parallèlement au troisième pivot, ce premier doigt transmettant au bras de levier inférieur de la pédale de frein un couple orienté en sens inverse du premier sens lorsque la pédale d'accélérateur est dans sa position de repos.

Cette première liaison peut en outre utilement comprendre une chape montée sur le bras de levier inférieur de la pédale de frein et sur laquelle le premier doigt de la pédale d'accélérateur est en appui lorsque la pédale d'accélérateur est dans sa position de repos.

Toujours dans le but d'augmenter la sécurité de conduite, le pédalier de l'invention peut comprendre, entre la pédale d'accélérateur et la pédale d'embrayage, une seconde liaison qui empêche aux pédales d'accélérateur et d'embrayage d'adopter simultanément leurs positions respectives d'actionnement maximal.

Dans ce cas, la pédale d'embrayage comprend par exemple des bras de levier inférieur et supérieur s'étendant de part et d'autre du premier pivot, le bras de levier inférieur portant un patin d'embrayage, et la seconde liaison comprend un second doigt porté par le bras de levier supérieur de la pédale d'embrayage, parallèlement au premier pivot, ce second doigt transmettant au bras de levier inférieur de la pédale d'accélérateur un couple orienté suivant le premier sens, au moins lorsque la pédale d'embrayage atteint sa position d'actionnement maximal alors que la pédale d'accélérateur n'est pas dans sa position de repos.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en perspective partielle d'un pédalier conforme à l'invention, représenté au repos;

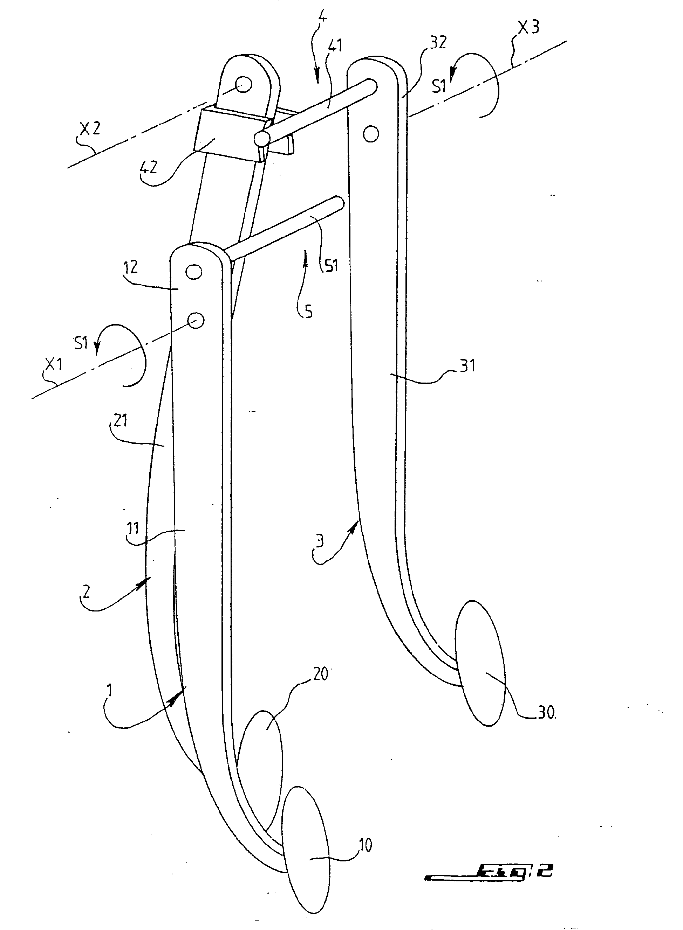

- la Figure 2 est une vue en perspective partielle d'un pédalier conforme à l'invention, représenté en phase de freinage;

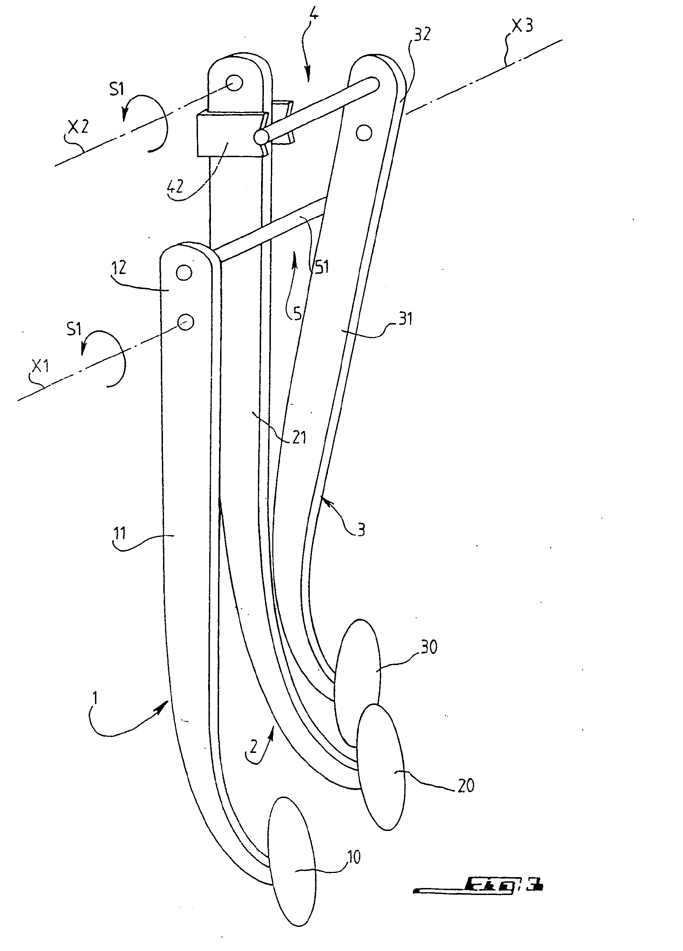

- la Figure 3 est une vue en perspective partielle d'un pédalier conforme à l'invention, représenté en phase d'accélération; et

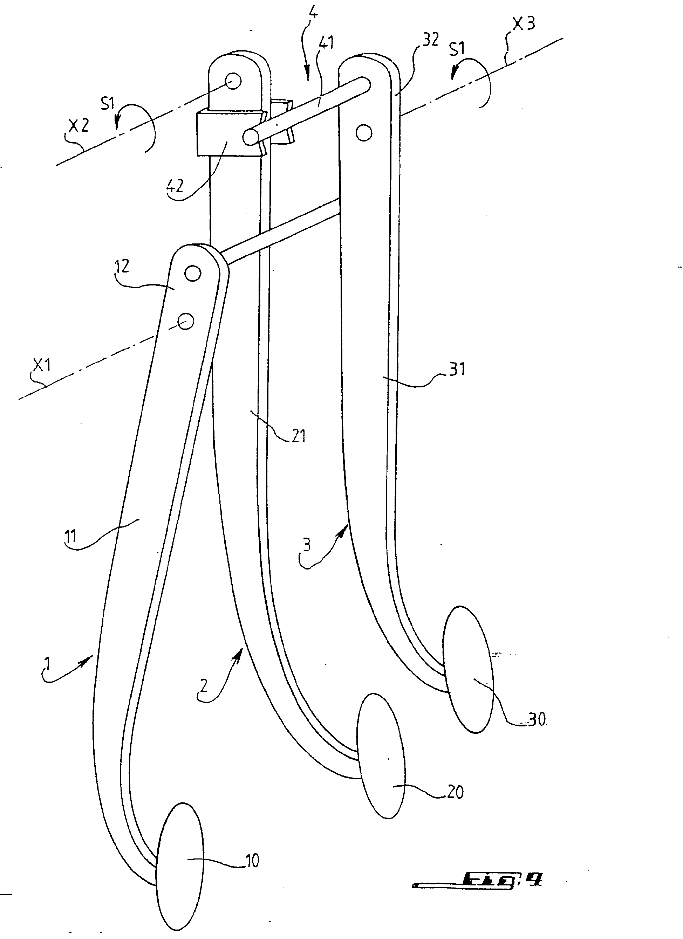

- la Figure 4 est une vue en perspective partielle d'un pédalier conforme à l'invention, représenté en phase de débrayage.

Comme annoncé précédemment, l'invention concerne un pédalier pour véhicule automobile.

De façon traditionnelle, ce pédalier comprend une pédale d'embrayage 1, une pédale de frein 2, et une pédale d'accélérateur 3, ces pédales étant montées à rotation autour de pivots respectifs X1, X2 et X3, sensiblement parallèles les uns aux autres.

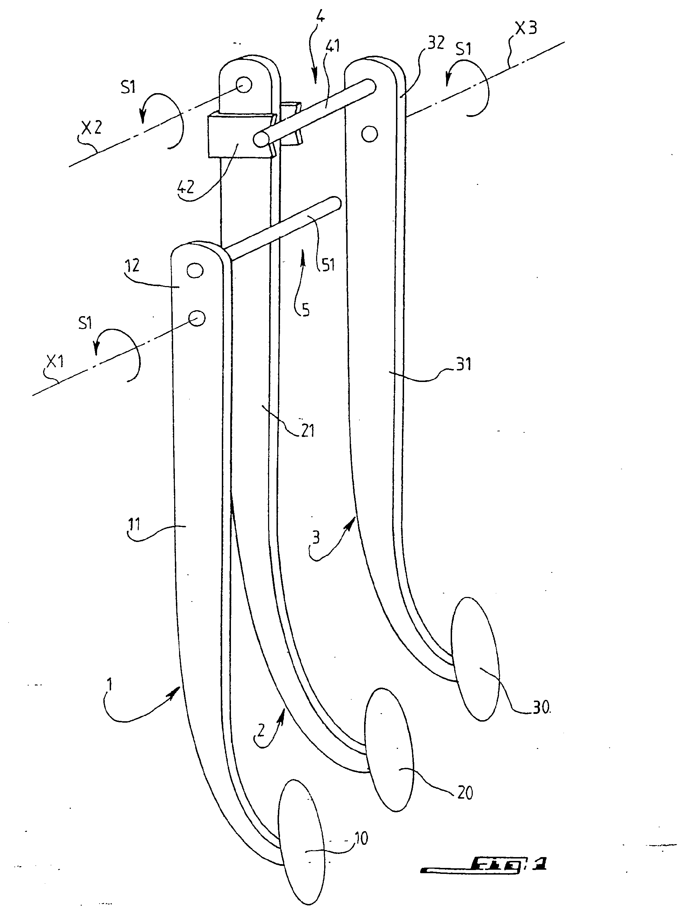

Chacune des pédales 1 à 3 est associée à un ressort correspondant (non représenté), qui applique sur cette pédale un couple de rappel élastique orienté suivant un sens de rotation S1 autour de son pivot, et qui la sollicite ainsi vers sa position de repos illustrée à la figure 1.

Chacune des pédales 1 à 3 peut par ailleurs être déplacée de sa position de repos par application d'une force exercée par le conducteur du véhicule sur un patin correspondant, tel que 10, 20, ou 30, porté par un bras de levier inférieur 11, 21, ou 31 de cette pédale.

A tout instant, chacune des pédales 1 à 3 adopte donc soit une position de repos, soit une position d'actionnement maximal, soit une position intermédiaire entre les positions de repos et d'actionnement maximal.

Selon ce mode de réalisation de l'invention, le pédalier comprend, entre la pédale d'accélérateur 3 et la pédale de frein 2, une liaison 4 qui place la pédale de frein 2 dans une position intermédiaire si la pédale d'accélérateur 3 est dans sa position de repos, et qui n'autorise le retour de la pédale de frein 2 dans sa position de repos que lorsque la pédale d'accélérateur 3 a quitté sa propre position de repos.

La liaison 4 comprend par exemple un doigt 41 porté par le bras de levier supérieur 32 de la pédale d'accélérateur 3 et qui s'étend parallèlement au pivot X3 de la pédale d'accélérateur 3.

Lorsque la pédale d'accélérateur 3 est dans sa position de repos sous l'effet du ressort associé, le doigt 41 est sollicité dans le sens indiqué par la flèche S1 autour du pivot X3 et transmet donc au bras de levier inférieur 21 de la pédale de frein 2 un couple orienté en sens inverse du sens S1, la pédale de frein 2 étant ainsi légèrement déplacée de sa position de repos et immédiatement opérationnelle dès son actionnement.

En revanche, dès que la pédale d'accélérateur 3 quitte sa position de repos sous l'effet d'un effort exercé par le conducteur sur le patin 30, le doigt 41 est sollicité dans le sens inverse de celui qu'indique la flèche S1, et autorise la pédale de frein 2 à retourner dans sa position de repos.

Comme le montrent les figures, la liaison 4 comprend avantageusement une chape 42 qui est montée sur le bras de levier inférieur 21 de la pédale de frein 2, et sur laquelle le doigt 41 de la pédale d'accélérateur 3 est en appui lorsque la pédale d'accélérateur 3 est dans sa position de repos.

Une seconde liaison 5 peut aussi être prévue entre la pédale d'accélérateur 3 et la pédale d'embrayage 1 pour empêcher que ces deux pédales ne soient simultanément actionnées jusqu'à leurs positions respectives d'actionnement maximal ou même jusqu'à proximité de ces positions.

Cette seconde liaison 5 comprend par exemple un second doigt 51 porté par le bras de levier supérieur 12 de la pédale d'embrayage 1, et qui s'étend parallèlement au pivot X1 de la pédale d'embrayage 1.

Lorsque la pédale d'embrayage 1 est enfoncée, le second doigt 51 se déplace autour du pivot X1 dans le sens inverse du sens S1.

Dans ces conditions, si la pédale d'embrayage 1 atteint sa position d'actionnement maximal alors que la pédale d'accélérateur 3 n'est pas dans sa position de repos, le second doigt 51 appuie sur le bras de levier inférieur 31 de la pédale d'accélérateur 3 et transmet à ce bras de levier un couple orienté suivant le premier sens S1, qui ramène donc la pédale d'accélérateur 3 dans sa position de repos.

Réciproquement, si la pédale d'accélérateur 3 est enfoncée alors que la pédale d'embrayage 1 n'est pas dans sa position de repos, le bras de levier inférieur 31 de la pédale d'accélérateur 3 rencontre le deuxième doigt 51, qu'il sollicite en rotation autour du pivot X1 dans le sens S1, c'est-à-dire dans un sens propre à ramener la pédale d'embrayage 1 dans sa position de repos.

## Revendications

1. Pédalier pour véhicule automobile, comprenant une pédale d'embrayage (1), une pédale de frein (2), et une pédale d'accélérateur (3) montées à rotation autour de premier, second et troisième pivots respectifs (X1, X2, X3) sensiblement parallèles les uns aux autres, chaque pédale (1, 2, 3) adoptant à tout instant soit une position de repos, soit une position d'actionnement maximal, soit une position intermédiaire entre les positions de repos et d'actionnement maximal, et chaque pédale (1, 2, 3) recevant un couple élastique orienté suivant un premier sens de rotation (S1) autour de son pivot et qui la sollicite vers sa position de repos, **caractérisé en ce qu'**il comprend, entre la pédale d'accélérateur (3) et la pédale de frein (2), une première liaison (4) qui place la pédale de frein (2) dans une position intermédiaire lorsque la pédale d'accélérateur (3) est dans dans sa position de repos et place la pédale de frein (2) dans sa position de repos lorsque la pédale d'accélérateur n'est pas dans sa position de repos, et **en ce que** la pédale de frein (2) comprend un bras de levier inférieur (21) s'étendant entre le second pivot (X2) et un patin de frein (20), **en ce que** la pédale d'accélérateur (3) comprend des bras de levier inférieur et supérieur (31, 32) s'étendant de part et d'autre du troisième pivot (X3), le bras de levier inférieur (31) portant un patin d'accélérateur (30), et **en ce que** la première liaison (4) comprend un premier doigt (41) porté par le bras de levier supérieur (32) de la pédale d'accélérateur (3), parallèlement au troisième pivot (X3), ce premier doigt (41) transmettant au bras de levier inférieur (31) de la pédale de frein (2) un couple orienté en sens inverse du premier sens (S1) lorsque la pédale d'accélérateur (3) est dans sa position de repos.

2. Pédalier suivant la revendication 1, **caractérisé en ce que** la première liaison (4) comprend une chape (42) montée sur le bras de levier inférieur (21) de la pédale de frein (2) et sur laquelle le premier doigt (41) de la pédale d'accélérateur (3) est en appui lorsque la pédale d'accélérateur (3) est dans sa position de repos.

3. Pédalier suivant l'une quelconque des revendications précédentes, **caractérisé en ce qu'**il comprend, entre la pédale d'accélérateur (3) et la pédale d'embrayage (1), une seconde liaison (5) qui empêche aux pédales d'accélérateur (3) et d'embrayage (1) d'adopter simultanément leurs positions respectives d'actionnement maximal.

4. Pédalier suivant la revendication 3, **caractérisé en ce que** la pédale d'embrayage (1) comprend des bras de levier inférieur et supérieur (11, 12) s'étendant de part et d'autre du premier pivot (X1), le bras de levier inférieur (11) portant un patin d'embrayage (10), et **en ce que** la seconde liaison (5) comprend un second doigt (51) porté par le bras de levier supérieur (12) de la pédale d'embrayage (1), parallèlement au premier pivot (X1), ce second doigt (51) transmettant au bras de levier inférieur (31) de la pédale d'accélérateur (3) un couple orienté suivant le premier sens (S1), au moins lorsque la pédale d'embrayage (1) atteint sa position d'actionnement maximal alors que la pédale d'accélérateur (3) n'est pas dans sa position de repos.

## Claims

1. Pedal box for a motor vehicle, comprising a clutch pedal (1), a brake pedal (2) and an accelerator pedal (3) which are mounted to rotate about respective first, second and third pivots (X1, X2, X3) that are roughly parallel to one another, each pedal (1, 2, 3) at each moment adopting either a rest position, or a position of maximum actuation, or an intermediate position somewhere between the rest position and the position of maximum actuation, and each pedal (1, 2, 3) receiving an elastic torque directed in a first direction of rotation (S1) about its pivot and which urges it towards its rest position, **characterized in that** it comprises, between the accelerator pedal (3) and the brake pedal (2), a first link (4) which places the brake pedal (2) in an intermediate position when the accelerator pedal (3) is in its rest position and places the brake pedal (2) in its rest position when the accelerator pedal is not in its rest position, and **in that** the brake pedal (2) comprises a lower lever arm (21) extending between the second pivot (X2) and a brake pad (20), **in that** the accelerator pedal (3) comprises lower and upper lever arms (31, 32) extending one on each side of the third pivot (X3), the lower lever arm (31) bearing an accelerator pad (30), and **in that** the first link (4) comprises a first finger (41) borne by the upper lever arm (32) of the accelerator pedal (3), parallel to the third pivot (X3), this first finger (41) transmitting to the lower lever arm (31) of the brake pedal (2) a torque directed in the opposite direction to the first direction (S1) when the accelerator pedal (3) is in its rest position.

2. Pedal box according to Claim 1, **characterized in that** the first link (4) comprises a clevis (42) mounted on the lower lever arm (21) of the brake pedal (2) and against which the first finger (41) of the accelerator pedal (3) rests when the accelerator pedal (3) is in its rest position.

3. Pedal box according to any one of the preceding claims, **characterized in that** it comprises, between the accelerator pedal (3) and the clutch pedal (1), a second link (5) which prevents the accelerator (3) and clutch (1) pedals from simultaneously adopting their respective positions of maximum actuation.

4. Pedal box according to Claim 3, **characterized in that** the clutch pedal (1) comprises lower and upper lever arms (11, 12) extending one on each side of the first pivot (X1), the lower lever arm (11) bearing a clutch pad (10), and **in that** the second link (5) comprises a second finger (51) borne by the upper lever arm (12) of the clutch pedal (1), parallel to the first pivot (X1), this second finger (51) transmitting to the lower lever arm (31) of the accelerator pedal (3) a torque directed in the first direction (S1), at least when the clutch pedal (1) reaches its position of maximum actuation when the accelerator pedal (3) is not in its rest position.

## Patentansprüche

1. Pedalanordnung für ein Kraftfahrzeug, mit einem Kupplungspedal (1), einem Bremspedal (2) und einem Gaspedal (3), die um eine erste, zweite bzw. dritte Drehachse (X1, X2, X3), welche im Wesentlichen parallel zueinander verlaufen, drehbar angebracht sind, wobei jedes Pedal (1, 2, 3) zu jedem Zeitpunkt entweder eine Ruhestellung, eine Stellung maximaler Betätigung oder eine Zwischenstellung zwischen der Ruhestellung und der Stellung maximaler Betätigung einnimmt und jedes Pedal (1, 2, 3) ein elastisches Drehmoment aufnimmt, das gemäß einer ersten Drehrichtung (S1) um seine Drehachse gerichtet ist und es in seine Ruhestellung beaufschlagt, **dadurch gekennzeichnet, dass** sie zwischen dem Gaspedal (3) und dem Bremspedal (2) eine erste Verbindung (4) aufweist, die das Bremspedal (2) in eine Zwischenstellung bringt, wenn sich das Gaspedal (3) in seiner Ruhestellung befindet, und die das Bremspedal (2) in seine Ruhestellung bringt, wenn sich das Gaspedal nicht in seiner Ruhestellung befindet, und dass das Bremspedal (2) einen unteren Hebelarm (21) aufweist, der sich zwischen der zweiten Drehachse (X2) und einer Bremspedalauflage (20) erstreckt, dass das Gaspedal (3) einen unteren und einen oberen Hebelarm (31, 32) aufweist, die sich auf der einen und auf der anderen Seite der dritten Drehachse (X3) erstrecken, wobei der untere Hebelarm (31) eine Gaspedalauflage (30) trägt, und dass die erste Verbindung (4) einen ersten Zapfen (41) aufweist, der von dem oberen Hebelarm (32) des Gaspedals (3) parallel zur dritten Drehachse (X3) getragen ist, wobei dieser erste Zapfen (41) dem unteren Hebelarm (31) des Bremspedals (2) ein Drehmoment überträgt, das in eine zur ersten Richtung (S1) entgegengesetzte Richtung gerichtet ist, wenn sich das Gaspedal (3) in seiner Ruhestellung befindet.

2. Pedalanordnung nach Anspruch 1, **dadurch gekennzeichnet, dass** die erste Verbindung (4) einen Halter (42) aufweist, der am unteren Hebelarm (21) des Bremspedals (2) angebracht ist und an dem der erste Zapfen (41) des Gaspedals (3) anliegt, wenn sich das Gaspedal (3) in seiner Ruhestellung befindet.

3. Pedalanordnung nach einem der vorhergehenden Ansprüche, **dadurch gekennzeichnet, dass** sie zwischen dem Gaspedal (3) und dem Kupplungspedal (1) eine zweite Verbindung (5) aufweist, die das Gaspedal (3) und das Kupplungspedal (1) daran hindert, gleichzeitig ihre jeweilige Stellung maximaler Betätigung einzunehmen.

4. Pedalanordnung nach Anspruch 3, **dadurch gekennzeichnet, dass** das Kupplungspedal (1) einen unteren und einen oberen Hebelarm (11, 12) aufweist, die sich auf der einen und auf der anderen Seite der ersten Drehachse (X1) erstrecken, wobei der untere Hebelarm (11) eine Kupplungspedalauflage (10) trägt, und dass die zweite Verbindung (5) einen zweiten Zapfen (51) aufweist, der von dem oberen Hebelarm (12) des Kupplungspedals (1) parallel zur ersten Drehachse (X1) getragen ist, wobei dieser zweite Zapfen (51) dem unteren Hebelarm (31) des Gaspedals (3) ein Drehmoment überträgt, das gemäß der ersten Richtung (S1) gerichtet ist, zumindest wenn das Kupplungspedal (1) seine Stellung maximaler Betätigung erreicht und sich das Gaspedal (3) dabei nicht in seiner Ruhestellung befindet.
